# EUROPÄISCHE PATENTANMELDUNG

(11) **EP 2 270 616 A2**
(43) Veröffentlichungstag der Anmeldung: **05.01.2011**
(21) Anmeldenummer: 10006807.1
(22) Anmeldetag: 01.07.2010
(51) Int. Cl.: G05B 19/4062

(54) **Verfahren zum Betrieb eines Rundschalttischs**

(30) Priorität: 02.07.2009 DE 102009031486
(71) Anmelder: WEISS GmbH, 74722 Buchen (Odw.) (DE)
(72) Erfinder: Erbacher, Martin, 74722 Buchen-Hainstadt (DE)
(74) Vertreter: Manitz, Finsterwald & Partner GbR

(57) **Zusammenfassung**

Die vorliegende Erfindung betrifft ein Verfahren zum Betrieb eines Rundschalttischs mit einem von einem Motor direkt oder indirekt beaufschlagten Drehteller. Während des Betriebs des Rundschalttischs wird zumindest zeitweise ein zeitlicher Verlauf einer Leistungsaufnahme des Motors oder einer davon abhängigen Größe überwacht, um den Zustand des Rundschalttischs zu überwachen.

## Beschreibung

Die Erfindung betrifft ein Verfahren zum Betrieb eines Rundschalttischs mit einem von einem Motor direkt oder indirekt beaufschlagten Drehteller.

Ein Rundschalttisch ist in der Regel ein Teil einer Werkzeugmaschine, auf dem ein oder mehrere Werkstücke zur Bearbeitung befestigt werden. Ein Rundschalttisch hat eine Drehachse, um die der Drehteller mit dem/den darauf befestigten Werkstück(en) gedreht werden kann, um beispielsweise Bearbeitungen in verschiedenen Positionen oder am drehenden Werkstück vorzunehmen. Ebenso werden Rundschalttische verwendet, um mehrere auf dem Drehteller aufgespannte Werkstücke von Bearbeitungsstation zu Bearbeitungsstation zu transportieren.

Rundschalttische werden dabei oftmals in Produktionslinien eingesetzt, bei denen ein Ausfall des Gerätes zu großen Zeitverzögerungen und damit hohen Produktionsausfallkosten führt. Im schlimmsten Fall wird die Produktionslinie vollständig blockiert, bis der defekte Rundschalttisch repariert oder ausgetauscht ist. Es ist daher von großer Bedeutung, den Zustand des Rundschalttischs während des Betriebs im Auge zu behalten, um bei einer Störung schnell eingreifen zu können.

Es ist eine Aufgabe der Erfindung, ein Verfahren zum Betrieb eines Rundschalttischs zu schaffen, bei dem der Zustand des Rundschalttischs auf einfache Weise aber doch zuverlässig überwacht wird.

Gelöst wird diese Aufgabe erfindungsgemäß durch ein Verfahren mit den Merkmalen des Anspruchs 1 und insbesondere dadurch, dass während des Betriebs des Rundschalttischs zumindest zeitweise ein zeitlicher Verlauf einer Leistungsaufnahme des Motors oder einer davon abhängigen Größe überwacht wird.

Mit anderen Worten wird erfindungsgemäß nicht die Funktion der "Ausgangskomponenten" des Rundschalttischs - wie beispielsweise der Bewegung des Drehtellers - überwacht. Vielmehr basiert die Funktionskontrolle auf einer Beobachtung der "Eingangsseite" des Rundschalttischs, nämlich der Leistungsaufnahme Motors oder einer Größe/eines Parameters der davon abhängt. Unter der "Eingangsseite" ist somit der Antrieb des Rundschalttischs zu verstehen. Der "Ausgangsseite" entspricht demnach eine durch die Umsetzung der auf der Eingangsseite erbrachten Motorleistung erzeugte Drehbewegung des Drehtellers.

Der Motor beaufschlagt den Drehteller, d.h. dieser ist direkt oder indirekt - beispielsweise über ein Getriebe und/oder eine Kurventrommel/Mitnehmer-Kopplung - mit dem Drehteller antriebswirksam verbunden. Die Leistungsaufnahme des Motors hängt dabei in der Regel unter anderem von der Belastung durch die auf dem Drehteller angeordneten Werkstücke ab. Die Leistungsaufnahme kann aber auch durch einen charakteristischen zeitlichen Verlauf geprägt sein, die beispielsweise von einem Taktbetrieb des Rundschalttischs abhängt. Hier kann insbesondere ein periodischer Verlauf der Leistungsaufnahme gegeben sein. In bestimmten Fällen kann die Leistungsaufnahme während des Betriebs auch im Wesentlichen konstant sein.

Erfindungsgemäß ist wesentlich, dass der zeitliche Verlauf der - sich ändernden oder im Wesentlichen konstanten - Leistungsaufnahme des Motors zumindest zeitweise überwacht wird. Mit anderen Worten muss die Überwachung nicht zwingend ununterbrochen erfolgen. Entscheidend ist jedoch, dass ein Überwachung nicht punktuell vorgenommen wird sondern zumindest jeweils vorbestimmte Zeitabschnitte umfasst.

Eine solche Leistungsaufnahmeüberwachung ist einfach zu realisieren und daher kostengünstig. Trotzdem ermöglicht das erfindungsgemäße Verfahren eine zuverlässige Zustandsüberwachung des Rundschalttischs, so dass im Falle einer Fehlfunktion oder sogar präventiv - d.h. wenn sich das Auftreten einer Fehlfunktion anbahnt - geeignete Maßnahmen ergriffen werden können.

Bevorzugt umfasst die Überwachung ein Bestimmen eines IST-Datensatzes zumindest eines die Leistungsaufnahme charakterisierenden Parameters und einen Vergleich des IST-Datensatzes mit einem Referenzdatensatz des Parameters. Der IST-Datensatz und/oder der Referenzdatensatz können einen oder mehrere Parameter umfassen, die charakteristisch für die Leistungsaufnahme sind. Bei einer Verwendung eines elektrischen Motors zum Antrieb des Rundschalttischs kann der charakterisierende Parameter beispielsweise der von dem Motor aufgenommene Strom sein. Der Referenzdatensatz umfasst Sollwerte des überwachten Parameters bzw. der überwachten Parameter. Eine Abweichung der Werte des IST-Datensatzes von den Werten des Referenzdatensatzes um eine bestimmtes Maß stellt somit eine Abweichung vom gewünschten Zustand des Rundschalttischs dar (Sollzustand), die durch die Überwachung erfasst wird, um entsprechende Gegenmaßnahmen einleiten zu können, wie etwa eine Abschaltung des Rundschalttischs oder die Abgabe eines Warnsignals. Der IST-Datensatz und der Referenzdatensatz können hierbei insbesondere jeweils aus einer Zeitreihe von Einzelwerten des Parameters bestehen.

Es kann vorgesehen sein, dass ein einzelner IST-Datenwert mit einem entsprechenden Referenzdatensatz, z.B. in Form eines einzelnen Werts, verglichen wird. Dieser Vergleich wird mit mehreren zeitlich aufeinander folgenden einzelnen IST-Datenwerten über einen gewissen Zeitraum durchgeführt, um abschätzen zu können, ob eine Fehlfunktion des Rundschalttischs vorliegt.

Es ist jedoch vorteilhaft, wenn während eines vorbestimmten Zeitraums eine Zeitreihe von Einzelwerten des Parameters ermittelt wird, die anschließend ausgewertet wird, um den IST-Datensatz zu bestimmen. D.h. der Vergleich des IST-Datensatzes mit dem Referenzdatensatz findet erst nach einer Auswertung der Einzelwerte des Parameters statt. Die Leistungsaufnahme des Motors wird also für einen bestimmten Zeitraum beobachtet und die ermittelten Daten werden anschließend ausgewertet. Das Ergebnis der Auswertung kann ein IST-Datensatz sein, der selbst wieder eine Zeitreihe bildet, wie beispielsweise bei einer Glättung oder Filterung der Einzelwerte des Parameters (z.B. exponentielle Glättung, Spline-Fit, Tiefpass-Filter, Hochpass-Filter, ...). Für die Auswertung der Daten kommt grundsätzlich jede der bekannten Methoden der Signalauswertung - oder Kombinationen dieser Methoden - in Frage.

Vorzugsweise umfasst die Auswertung der Zeitreihe die Bildung eines Mittelwerts oder mehrerer Mittelwerte. Beispielsweise können mehrere einzelne Messwerte zur Eliminierung von Messungenauigkeiten zu arithmetischen oder geometrischen Mitteln zusammengefasst werden, die wiederum einzeln mit Werten des Referenzdatensatzes verglichen werden. Die Mittelwerte können aber auch selbst wieder eine Zeitreihe bilden, die einer weiteren Auswertung zugeführt werden (z.B. gleitender Mittelwert).

Eine weitere Möglichkeit der Zeitreihenauswertung umfasst die Durchführung einer Analyse des Frequenz- und/oder Amplitudengehalts des IST-Datensatzes. Insbesondere eine Fourieranalyse liefert zuverlässige Informationen hinsichtlich des Frequenzspektrums der Zeitreihe, was wiederum Aussagen über den Zustand des Rundschalttischs ermöglicht.

Gemäß einer vorteilhaften Ausführungsform des Verfahrens wird der Referenzdatensatz in einem Speicher einer dem Rundschalttisch zugeordneten Steuereinheit hinterlegt. Dies ermöglicht den schnellen Zugriff auf den Referenzdatensatz.

Der Referenzdatensatz kann grundsätzlich vordefiniert werden, d. h. er ist für alle im Wesentlichen baugleichen oder ähnlichen Rundschalttische gleich bzw. ähnlich. Bevorzugt ist es jedoch, wenn der Referenzdatensatz durch einen Lernprozess ermittelt wird. Dieser Lernprozess kann werkseitig erfolgen, d. h. beispielsweise nach Abschluss der Montage des Rundschalttischs. Alternativ oder zusätzlich ist es auch möglich, den Lernprozess an dem Einsatzort des Rundschalttischs - beispielsweise in einer Produktionslinie - durchzuführen bzw. abzuschließen, so dass der Referenzdatensatz letztlich individuell an den jeweils gewünschten Einsatzzweck des Rundschalttischs angepasst werden kann.

Als Grundlagen des Lernprozesses kommen alternativ oder in beliebigen Kombinationen verschiedene Zustände des Rundschalttischs in Frage. Beispielsweise kann die Grundlage des Lernprozesses die Leistungsaufnahme des Motors in einem fehlerfreien Zustand des Rundschalttischs sein. Dass heißt alle Komponenten funktionieren fehlerfrei und der - oder die - bei einem Testlauf des fehlerfreien Geräts ermittelten Leistungsaufnahmeparameter stellen direkt oder in indirekter Form - etwa als Einzelwerte, als Zeitreihen und/oder als gemittelte/gefilterte Daten - die Basis des Lernprozesses dar. Der Rundschalttisch kann dabei unbelastet sein oder mit Werkstücken versehen sein, die eine bestimmungsgemäße Belastung darstellen.

Zusätzlich oder alternativ kann die Grundlage des Lernprozesses auch die Leistungsaufnahme des Motors in einem fehlerbehafteten Zustand des Rundschalttischs sein. Mit anderen Worten wird die Leistungsaufnahme des Rundschalttischs gemessen, wenn bestimmte, durch definierte Ursachen bedingte Fehler vorliegen, die bewusst vorgesehen sind. Beispielswiese kann durch den Lernprozess bestimmt werden, wie sich die Leistungsaufnahme des Motors bei bestimmten Fehlerursachen ändert. Tritt während der Überwachung bei Betrieb des Rundschalttischs eine charakteristisch veränderte Leistungsaufnahme auf, so kann sofort bestimmt werden, welche Ursache der Fehler hat. Dabei macht man sich zunutze, dass sich die Leistungsaufnahme des Motors unterschiedlich verändert, je nach dem, ob es sich bei der Störung beispielsweise um einen Lagerschaden des Drehtellers oder um ein Problem mit dem Antriebsmotor selbst handelt. Bei der Berücksichtigung von verschiedenen Fehlerzuständen während des Lernprozesses ist es von Vorteil, wenn mehrere Referenzdatensätze hinterlegt werden, insbesondere für jeden möglicherweise auftretenden Fehler einer. Es ist auch möglich, verschiedene Fehlerquellen zu kombinieren und dadurch komplexe Leistungsaufnahmeabweichungen zu simulieren und einlernen zu können.

Vorzugsweise wird bei einer einen vordefinierten Schwellwert überschreitenden Abweichung des IST-Datensatzes von dem Referenzdatensatz ein Warnsignal ausgegeben. Das Warnsignal kann den IST-Datensatz oder davon abgeleitete Kenndaten umfassen, um zeitnah eine Analyse des vorliegenden Problems zu ermöglichen.

Gemäß einer vorteilhaften Weiterbildung des Verfahrens kann das Warnsignal automatisch an eine Datenübertragungseinrichtung übertragen werden, die das Warnsignal an einen Warnungsempfänger weiterleitet. Insbesondere kann das Warnsignal per SMS oder E-Mail weitergeleitet werden, die insbesondere an das Servicepersonal des Rundschalttischherstellers und/oder des Benutzers gerichtet sind, um das Problem schnellst möglich zu analysieren und zu beheben. Alternativ oder zusätzlich kann das Warnsignal natürlich auch zu einer Abschaltung des Rundschalttischs oder einer mit diesem zusammenwirkenden Produktionsanlage führen.

Weiterhin betrifft die Erfindung einen Rundschalttisch mit einem von einem Motor direkt oder indirekt beaufschlagten Drehteller, der insbesondere über eine Kurventrommel von einem Motor zu einer Drehbewegung antreibbar ist. Der Rundschalttisch zeichnet sich dadurch aus, dass eine Steuereinheit vorgesehen ist, die eine Messvorrichtung aufweist, mit der zumindest ein die Leistungsaufnahme des Motors charakterisierender Parameter messbar ist.

Insbesondere ist der Motor ein elektrischer Motor. Mit der Messvorrichtung ist bei dieser Ausführungsform während des Betriebs des Rundschalttischs der von dem Motor aufgenommene Strom messbar.

Gemäß einer vorteilhaften Weiterbildung des Rundschalttischs ist die Steuereinheit derart ausgebildet, dass zumindest eine der vorstehend beschriebenen Ausführungsformen des Verfahrens durchführbar ist. Weitere vorteilhafte Ausführungsformen und Weiterbildungen der Erfindung sind in der Beschreibung, den Zeichnungen und den Unteransprüchen angegeben.

Die Erfindung wird nachfolgend beispielhaft anhand vorteilhafter Ausführungsformen unter Bezugnahme auf die Zeichnungen näher erläutert. Es zeigen:
- Fig. 1: den zeitlichen Verlauf des von einem Antriebsmotor eines Rundschalttischs aufgenommenen Stroms,
- Fig. 2: einen über mehrere Bewegungszyklen des Rundschalt- tischs "gestapelten" Strom-Zeit-Verlauf,
- Fig. 3a und 3b: den Strom-Zeit-Verlauf der Leistungsaufnahme eines Rundschalttischs mit leichten Lagerschäden bzw. eine Fourieranalyse des Strom-Zeit-Verlaufs,
- Fig. 4a und 4b: den Strom-Zeit-Verlauf der Leistungsaufnahme eines Rundschalttischs mit größeren Schäden bzw. eine Fou- rieranalyse des Strom-Zeit-Verlaufs.

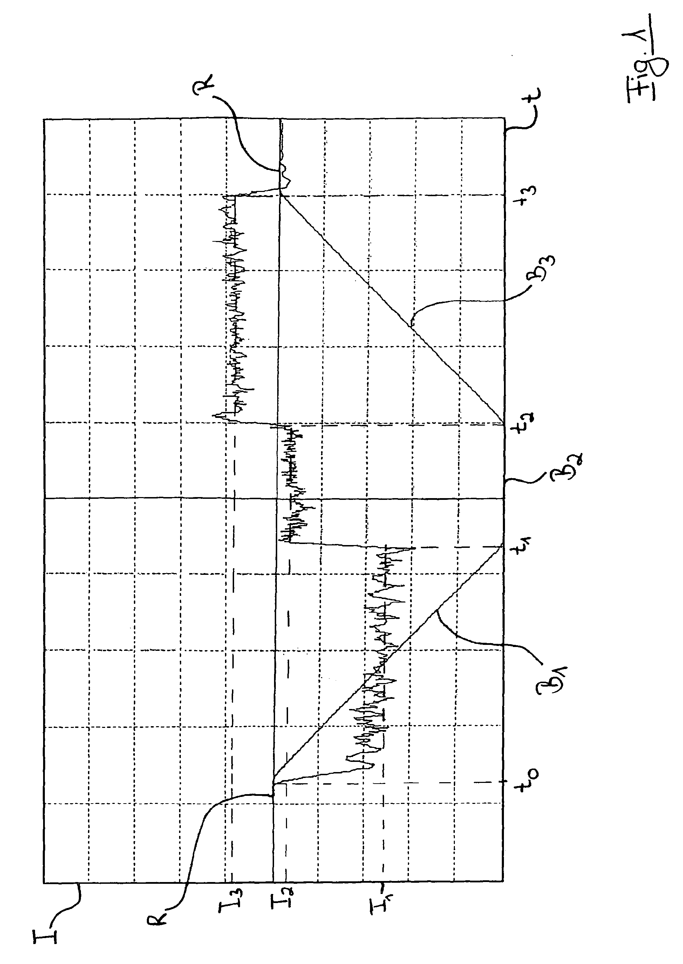

Fig. 1 zeigt ein Diagramm, bei dem der von einem Antriebsmotor eines Rundschalttischs aufgenommene Strom I (y-Achse) gegen die Zeit t (x-Achse) aufgetragen ist. Ausgehend von einem Grundzustand (Ruhelage R), in dem kein Strom I aufgenommen wird, wird der Antriebsmotor mit Strom I beaufschlagt, um einen Drehteller des Rundschalttischs in eine Drehbewegung zu versetzen. Das Antriebsmoment des Antriebsmotors kann beispielsweise über eine Kurventrommel oder direkt (Torque-Motor) auf den Drehteller übertragen werden.

Die Strombeaufschlagung beginnt zu einem Zeitpunkt t₀ und oszilliert - nach einer anfänglichen Anstiegsphase - um einen Beschleunigungsstrom I₁, der beispielsweise ein maximal anlegbarer Strom I ist, um eine möglichst schnelle Beschleunigung des Drehtellers zu bewirken. Die Beschleunigung des Drehtellers wird durch eine Gerade B₁ (Beschleunigungsphase) versinnbildlicht, die eine Drehgeschwindigkeit des Drehtellers als Funktion der Zeit t darstellt.

Zum Zeitpunkt t₁ ist die Beschleunigungsphase des Drehtellers abgeschlossen und der Drehteller hat seine Zieldrehgeschwindigkeit erreicht. Die nun im Wesentlichen konstante Drehgeschwindigkeit des Drehtellers (B₂) wird durch einen Betriebsstrom aufrechterhalten, der um einen Wert I₂ schwankt. Durch den Strom I₂ wird die der Drehbewegung des Drehtellers entgegenwirkende Reibung überwunden und somit die Drehgeschwindigkeit konstant gehalten.

Zum Abbremsen des Drehtellers (B₃) wird die Stromrichtung umgekehrt (Zeitpunkt t₂). Der den Antriebsmotor des Drehtellers beaufschlagende Strom schwankt nun um einen Wert I₃ mit einem Vorzeichen, das dem der Werte I₁ und I₂ entgegengesetzt ist. Da die in dem Rundtisch nicht zu vermeidende Reibung ebenfalls eine Bremswirkung aufweist, ist der Betrag des Bremsstroms I₃ kleiner als der des Beschleunigungsstroms I₁.

Wenn der Drehteller zum Zeitpunkt t₃ im Wesentlichen die Drehgeschwindigkeit 0 erreicht hat, wird auch der den Antriebsmotor beaufschlagende Strom I verringert und auf 0 zurückgefahren. Der Drehteller ist dann in Ruhe (Ruhelage R) und die auf ihm angeordneten Werkstücke können bearbeitet werden. Nach Abschluss der Bearbeitung schließt sich ein neuer Bewegungszyklus gleich dem vorstehend beschriebenen an.

Fig. 1 ist zu entnehmen, dass die Bewegungsphasen B₁, B₂, B₃ eines Bewegungszyklus, d. h. eines Bewegungsschritts zwischen zwei Ruhepositionen R des Drehtellers, im Wesentlichen durch drei Phasen mit - idealerweise -konstanter Bestromung I₁, I₂ und I₃ definiert sind. Die vom Antriebsmotor in den Phasen B₁, B₂, B₃ aufgenommenen Stromstärken I₁, I₂, I₃ weisen in der Praxis jedoch Schwankungen bzw. Abweichungen von dem beschriebenen idealisierten konstanten Verlauf auf. Auch der jeweilige Übergang zwischen den einzelnen Phasen B₁, B₂, B₃ weicht von einer idealisierten Stufenfunktion ab. Diese Abweichungen/ Schwankungen können zur Analyse des Zustands des Rundschalttischs genutzt werden.

Zum einen können dazu beispielsweise der Anstieg/Abfall der Stromstärke bei Wechseln der Bestromung (z. B. bei den Übergängen R-I₁, I₁-I₂,I₂-I₃ und I₃-R) genutzt werden, d. h. wie sich die tatsächlich gemessene Stromstärke I bei Wechseln zwischen den einzelnen Bestromungsniveaus I₁, I₂, I₃ verhält. Zum anderen kann aber auch das Schwankungsmuster des tatsächlich vom Antriebsmotor aufgenommenen Stroms I in den Bewegungsphasen B₁, B₂ bzw. B₃ genutzt werden, um den Zustand des Rundschalttischs zu überwachen. Eine derartige Überwachung kann beispielsweise durch einen Vergleich eines gemessenen I(t)-Verlaufs von einem vorgegebenen, d. h. idealerweise zu erwartenden, I(t)-Verlauf erfolgen. Eine Vielzahl von Filter- und/oder Analysemöglichkeiten, wie sie beispielsweise aus der Signalanalyse bekannt sind, kann angewandet werden, um den gemessenen I(t)-Verlauf in Relation zu Soll-Vorgaben zu bewerten (IST-SOLL-Vergleich).

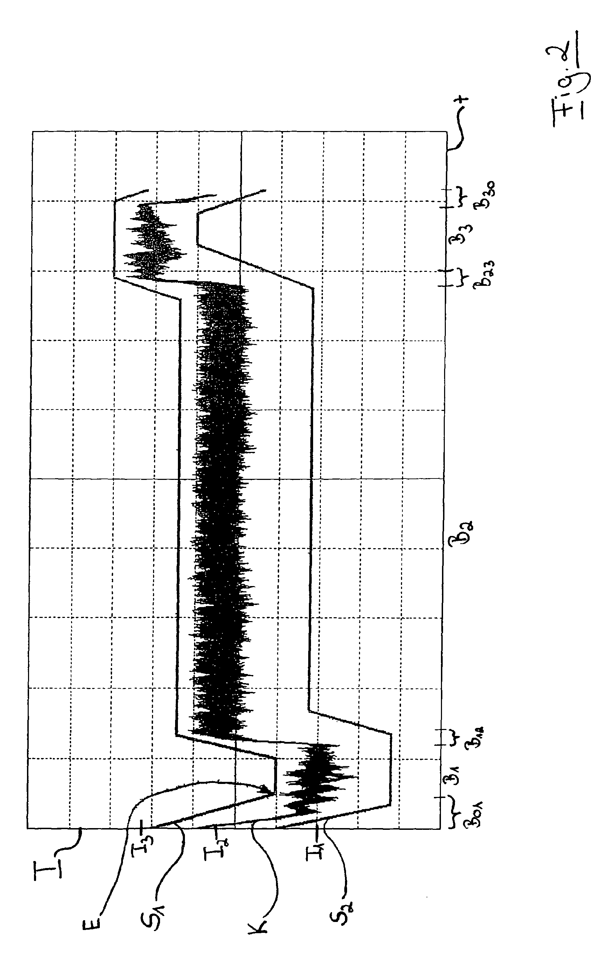

Eine Art der Vorverarbeitung der gemessenen Daten ist in Fig. 2 gezeigt. Die I(t)-Verläufe mehrerer Bewegungszyklen des Rundschalttischs werden dazu phasengetreu addiert ("gestapelt"), um statistische Schwankungen zu eliminieren und charakteristische Muster zu verstärken. Der Kurvenverlauf K ist somit eine (normierte) Summe mehrerer Einzelmessungen des I(t)-Verlaufs eines Bewegungszyklus, wie er beispielhaft anhand von Fig. 1 beschrieben wurde. Die Bewegungsphasen des in Fig. 2 gezeigten Beispiels stimmen jedoch nicht mit denen des in Fig. 1 gezeigten Beispiels überein. Unter anderem ist die Bewegungsphase B₂ (konstanter Drehtellergeschwindigkeit) bei dem Beispiel der Fig. 2 deutlich länger als die Beschleunigungsphase B₁ bzw. die Abbremsphase B₃. Außerdem sind die Übergänge zwischen den einzelnen Bewegungsphasen deutlicher ausgeprägt, so dass sie in Fig. 2 als eigene Übergangsphasen ausgewiesen sind (B₀₁, B₁₂, B₂₃ und B₃₀). Zusätzlich zu dem Kurvenverlauf K sind in Fig. 2 Schwellwertfunktionen S₁, S₂ eingetragen, die den Kurvenverlauf K einhüllen. Mit anderen Worten sind die Funktionswerte der Schwellwertfunktionen S₁, S₂ von der Bewegungsphase abhängig.

Die Funktionswerte von S₁ und S₂ bilden obere bzw. untere Schwellwerte, innerhalb derer der Kurvenverlauf K idealerweise verlaufen soll. Verlässt der I(t)-Verlauf der Strombeaufschlagung des Antriebsmotors den durch die Schwellwertfunktionen S₁, S₂ eingefassten Bereich (Toleranzfenster), so liegt eine Fehlfunktion des Rundschalttischs vor, die beispielsweise zu einer Aktivierung eines Warnsignals und/oder einer Abschaltung des Rundschalttischs führt.

Grundsätzlich können die Funktionen S₁, S₂ durch ein symmetrisches oder asymmetrisches Band um eine ideale I(t)-Funktion (Soll-Vorgabe) definiert sein (Idealwert +/- Schwellwert bzw. Idealwert +oberer Schwellwert/-unterer Schwellwert). Vorliegend sind die Funktionen S₁, S₂ allerdings voneinander unabhängig.

Die Schwellwertfunktionen S₁, S₂ weisen keinen stufenförmigen Verlauf auf, sondern tragen den Übergängen zwischen den Bestromungsniveaus I₁, I₂, I₃ der Hauptbewegungsphasen B₁, B₂, B₃ Rechnung. Im Bereich der Übergangsphasen B₀₁, B_{12,} B₂₃ und B₃₀ weisen die Schwellwertfunktionen S₁, S₂ daher einen linearen zeitabhängigen Verlauf auf. Es ist darauf hinzuweisen, dass die Eckpunkte der Schwellwertfunktion S₁ (z.B. Eckpunkt E beim Wechsel von Phase B₀₁ zu Phase B₁) nicht zu den gleichen Zeitpunkten wie die entsprechenden Eckpunkte der Schwellwertfunktion S₂ definiert sind, um ein für einen Betrieb des Rundschalttischs geeignetes Toleranzband zu schaffen. Die Schwellwertfunktionen S₁, S₂ können beliebig - z.B. auch nicht-linear - definiert werden, um dem jeweils vorliegenden Anforderungsprofil Rechnung zu tragen.

Wie vorstehend beschrieben kann durch die Schwellwertfunktionen S₁, S₂ das Verhalten des Rundschalttischs bzw. die Bewegung seines Drehtellers auf einfache Weise überwacht werden. Ein Überschreiten der Funktionswerte von S₁ bzw. ein Unterschreiten der Funktionswerte von S₂, die jeweils wiederum zeitabhängig sind, um die durch einen Schrittbetrieb des Rundschalttischs zeitabhängige Stromaufnahme seines Antriebsmotors zu berücksichtigen, führt zu einer sofortigen Reaktion des Systems, um weitere Schäden zu verhindern.

Eine solche Reaktion kann das einfache Aktivieren von akustischen und/oder optischen Warneinrichtungen sein. Vorteilhafterweise wird die Warnung aber auch elektronisch ausgegeben, um eine Benachrichtigung des Servicepersonals zu bewirken. Die Warnung kann beispielsweise über ein Computernetzwerk verteilt werden und/oder per E-mail und/oder per SMS an die geeigneten Personen versandt werden.

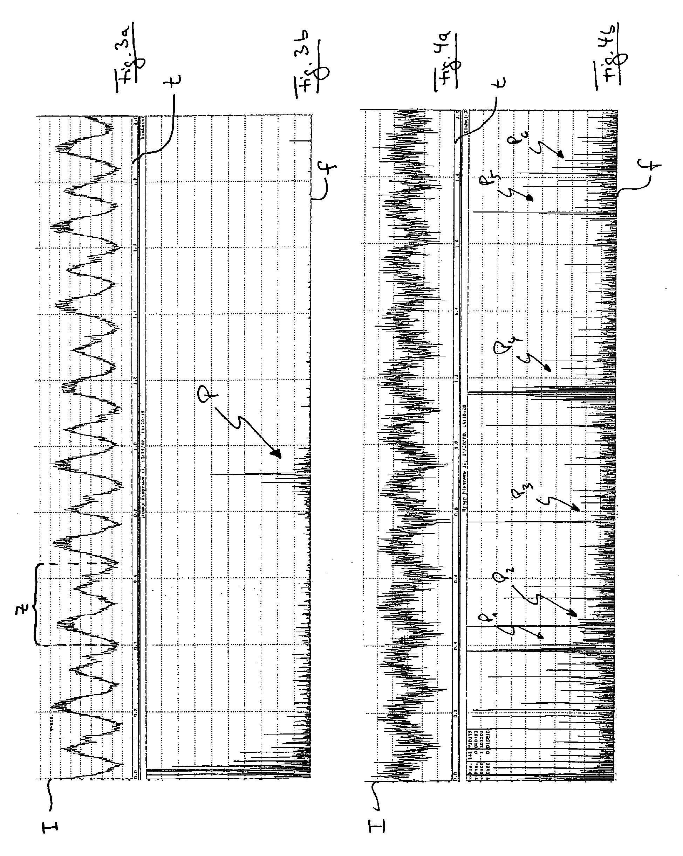

Eine Fehlfunktion kann beispielsweise ein Verschleiß eines Lagers sein, der in vielen Fällen zu einem Anstieg der Antriebsmotorbestromung I oder zu einer Verlängerung einer Bestromungsphase führt. Ein Abfall des aufgenommenen Stroms I kann beispielsweise dann auftreten, wenn der Antriebsmotor selbst versagt. Um möglichst frühzeitig über sich anbahnende Probleme oder Schäden informiert zu werden und dadurch auch präventiv Gegenmaßnahmen einleiten zu können, kann auf den Informationsgehalt des I(t)-Verlaufs zurückgegriffen werden, der sich in dessen Frequenzspektrum verbirgt. Dies soll nachfolgend anhand der Fig. 3a und 3b sowie 4a und 4b erläutert werden.

Fig. 3a zeigt den zeitlichen Verlauf der Stromaufnahme (I(t)-Verlauf) eines Antriebsmotors eines Rundschalttischs. Die einzelnen Bewegungsphasen sind weniger deutlich abgegrenzt als in den vorstehend beschriebenen Beispielen. Dennoch ist eine deutliche Periodizität der Leistungsaufnahme (Stromaufnahme) zu erkennen. Beispielhaft ist ein Bewegungszyklus gekennzeichnet und mit dem Symbol Z bezeichnet.

Fig. 3b zeigt den Frequenzgehalt des in Fig. 3a dargestellten I(t)-Signals, der durch eine FFT ("Fast Fourier Transformation") ermittelt wurde. Dass heißt die Stromaufnahme des Antriebsmotors wurde von einem Zeitbereich in einen Frequenzbereich übertragen, um den Frequenzgehalt des Signals zu analysieren. In Fig. 3b ist das Resultat dieser Transformation dargstellt, d. h. die x-Achse stellt eine Frequenz f dar, während die y-Achse das Fourier-transformierte Signal bezeichnet, das ein Maß für einen Anteil eines Signals mit einer bestimmten Frequenz an dem Gesamtsignal ist.

Das Spektrum des I(t)-Signals der Fig. 3a wird durch niedrige Frequenzen dominiert, die sich aus der Grundfrequenz eines Bewegungszyklus sowie damit direkt zusammenhängenden Vorgängen ergeben. Im mittleren Bereich des Spektrums liegen jedoch Signalanteile, die eine ausgeprägte Amplitude aufweisen und einen wohldefinierten Signalpeak P bilden. Der Signalpeak P wird im vorliegenden Beispiel durch einen Lagerschaden des Rundschalttischs hervorgerufen. Aus der Signatur des Peaks P (Breite, Amplitude des Peaks P) ergibt sich, dass der Lagerschaden nicht derart gravierend ist, dass der Rundschalttisch sofort stillgelegt werden muss. Tritt während des Betriebes des Rundschalttischs ein solcher Peak P im Fourierspektrum des I(t)-Signals auf, so kann beispielsweise eine Vorwarnstufe ausgelöst werden, die dem Servicepersonal anzeigt, dass ein Lagerwechsel ansteht. Mit anderen Worten kann durch die Analyse des I(t)-Signals antizipiert werden, welche Schäden in etwa wann auftreten. Dies erleichtert die Planung von vorzunehmenden Wartungsarbeiten und trägt damit dazu bei, Ausfallzeiten des Rundschalttischs gering zu halten.

Die Analyse der Frequenzinformation des I(t)-Signals kann automatisiert erfolgen und in einem Steuergerät des Rundschalttischs durchgeführt werden. Eine Beobachtung der zeitlichen Entwicklung des Fehlers ist ebenfalls möglich. Dadurch kann extrapoliert werden, wann der sich anbahnende Schaden akut wird.

Den einzelnen Störungen, die in einem Rundschalttisch üblicherweise auftreten, sind jeweils charakteristische Signaturen im I(t)-Signal und damit in dessen Frequenzspektrum zu Eigen. Durch die Hinterlegung des jeweiligen "Fingerabdrucks" der unterschiedlichen Fehler, kann mit Hilfe der vorstehend beschriebenen Analyse frühzeitig aufgeklärt werden, welche Störungen vorliegen bzw. sich anbahnen. Dies gilt auch für Kombinationen verschiedener Fehlerquellen.

Die "Fingerabdrücke" können - wie grundsätzlich auch die Schwellwertfunktionen S₁ und S₂ - bereits werksseitig bei Montage des Rundschalttischs in dem Steuergerät hinterlegt werden. Jeder Rundschalttisch eines bestimmten Typs erhält somit die gleichen Daten, die zur Überwachung der Leistungsaufnahme genutzt werden. Es ist allerdings auch möglich, diese Daten individuell für jeden Rundschalttisch und/oder jede seiner Fehlerquellen individuell durch einen Lernprozess zu bestimmen. Wie eingangs beschrieben, kann das Einlernen auf der Basis eines fehlerfreien, eines fehlerbehafteten, eines belasteten und/oder eines unbelasteten Zustands des Rundschalttischs erfolgen.

In den Fig. 4a und 4b sind ein weiteres I(t)-Signal bzw. dessen Frequenzspektrum gezeigt. Das I(t)-Signal der Fig. 4a stammt von einem anderen Rundschalttisch als das der Fig. 3a und ist deutlich "verrauschter". Dies spiegelt sich auch im Frequenzspektrum dieses Signals wieder (Fig. 4b). Das Frequenzspektrum weist eine Reihe verschiedener ausgeprägter Peaks auf (z. B. P₁ bis P₆) und die Grundfrequenzen, die ein ordnungsgemäßes Funktionieren des Rundschalttischs charakterisieren - sind nicht mehr dominant. Generell ist zu sehen, dass auch das Frequenzspektrum "verrauschter" ist als das der Fig. 3b.

Aus diesen Informationen kann geschlossen werden, dass sich der überwachte Rundschalttisch in einem relativ schlechten Zustand befindet, d. h. es liegen eine Reihe von Störungen vor, die alsbald behoben werden müssen, um kein vollständiges Versagen des Rundschalttischs zu riskieren.

Grundsätzlich können auch Fallkonstellationen vorliegen, in denen sich das Frequenzspektrum der Leistungsaufnahme eines Rundschalttischs von dem Zustand der Fig. 3b zu dem der Fig. 4b hin entwickelt, d. h., dass sich der Peak P bei zunehmendem Verschleiß der entsprechenden Komponente verschiebt und dass neue Störungen hinzutreten.

Es versteht sich, dass zusätzlich oder alternativ zu den beschriebenen Methoden eine Reihe weiterer Signalanalysemethoden verwendet werden können, um das I(t)-Signal der Leistungsaufnahme eines Antriebsmotors eines Rundschalttischs zu überwachen. Dazu gehören auch Filterungs- und Mittelungsmethoden (z. B. "gleitendes Mittel").

Aus den vorstehenden Ausführungen wird deutlich, dass durch das beschriebene Verfahren und seine Varianten bzw. Ergänzungen eine frühzeitige Fehlererkennung möglich ist. Die Überwachung des Rundschalttischs, die entgegen den gezeigten Beispielen auch lediglich zeitweise erfolgen kann, ermöglicht eine vorausschauende Beobachtung, so dass präventiv Wartungsarbeiten an dem Rundschalttisch vorgenommen werden können, um unplanmäßige Ausfälle des Rundschalttischs zu verhindern und somit letztlich Kosten einsparen zu können.

### Bezugszeichenliste

- I: Strom
- t: Zeit
- t₀, t₁, t₂, t₃: Zeitpunkt
- I₁: Beschleunigungsstromstärke
- I₂: Betriebsstromstärke
- I₃: Abbremsstromstärke
- R: Ruhelage
- B₁: Beschleunigungsphase
- B₂: Betriebsphase
- B₃: Abbremsphase
- K: "gestapelte" Kurve
- S₁, S₂: Schwellwertfunktion
- B₀₁, B₁₂, B₂₃, B₃₀: Übergangsphase
- Z: Zyklus
- f: Frequenz
- P, P₁ bis P₆: Signalpeak

## Patentansprüche

1. Verfahren zum Betrieb eines Rundschalttischs mit einem von einem Motor direkt oder indirekt beaufschlagten Drehteller,
**dadurch gekennzeichnet, dass**
während des Betriebs des Rundschalttischs zumindest zeitweise ein zeitlicher Verlauf einer Leistungsaufnahme des Motors oder einer davon abhängigen Größe überwacht wird, um den Zustand des Rundschalttischs zu überwachen.

2. Verfahren nach Anspruch 1,
**dadurch gekennzeichnet, dass**
die Überwachung ein Bestimmen eines IST-Datensatzes zumindest eines die Leistungsaufnahme charakterisierenden Parameters und einen Vergleich des IST-Datensatzes mit zumindest einem Referenzdatensatz des Parameters umfasst.

3. Verfahren nach Anspruch 2,
**dadurch gekennzeichnet, dass**
während eines vorbestimmten Zeitraums eine Zeitreihe von Einzelwerten des Parameters ermittelt wird, die anschließend ausgewertet wird, um den IST-Datensatz zu bestimmen.

4. Verfahren nach Anspruch 3,
**dadurch gekennzeichnet, dass**
die Auswertung der Zeitreihe die Bildung eines Mittelwertes oder mehrerer Mittelwerte umfasst.

5. Verfahren nach Anspruch 3 oder 4,
**dadurch gekennzeichnet, dass**
die Auswertung der Zeitreihe eine Analyse des Frequenzspektrums der Zeitreihe umfasst, wobei die Analyse insbesondere eine Fourieranalyse ist.

6. Verfahren nach zumindest einem der Ansprüche 2 bis 5,
**dadurch gekennzeichnet, dass**
der Referenzdatensatz in einem Speicher einer dem Rundschalttisch zugeordneten Steuereinheit hinterlegt wird.

7. Verfahren nach zumindest einem der Ansprüche 2 bis 6,
**dadurch gekennzeichnet, dass**
der Referenzdatensatz des Parameters durch einen Lernprozess bestimmt wird.

8. Verfahren nach Anspruch 7,
**dadurch gekennzeichnet, dass**
die Grundlage des Lernprozesses die Leistungsaufnahme des Motors in einem fehlerfreien Zustand des Rundschalttischs ist.

9. Verfahren nach Anspruch 7 oder 8,
**dadurch gekennzeichnet, dass**
die Grundlage des Lernprozesses die Leistungsaufnahme des Motors bei einer bestimmungsgemäßen Belastung des Rundschalttischs ist.

10. Verfahren nach zumindest einem der Ansprüche 7 bis 9,
**dadurch gekennzeichnet, dass**
die Grundlage des Lernprozesses die Leistungsaufnahme des Motors in einem fehlerbehafteten Zustand des Rundschalttischs ist.

11. Verfahren nach zumindest einem der Ansprüche 2 bis 10,
**dadurch gekennzeichnet, dass**
bei einer einen vordefinierten Schwellwert überschreitenden Abweichung des IST-Datensatzes von dem Referenzdatensatz ein Warnsignal ausgegeben wird.

12. Verfahren nach Anspruch 11,
**dadurch gekennzeichnet, dass**
das Warnsignal automatisch an eine Datenübertragungseinrichtung übertragen wird, die das Warnsignal an einen Warnungsempfänger weiterleitet.

13. Rundschalttisch mit einem von einem Motor direkt oder indirekt beaufschlagten Drehteller, der insbesondere über eine Kurventrommel von einem Motor zu einer Drehbewegung antreibbar ist,
**dadurch gekennzeichnet, dass**
eine Steuereinheit vorgesehen ist, die eine Messvorrichtung aufweist, mit der zumindest ein die Leistungsaufnahme des Motors charakterisierender Parameter messbar ist.

14. Rundschalttisch nach Anspruch 13,
**dadurch gekennzeichnet, dass**
der Motor ein elektrischer Motor ist und dass mit der Messvorrichtung während des Betriebs des Rundschalttischs der von dem Motor aufgenommene Strom messbar ist.

15. Rundschalttisch nach Anspruch 13 oder 14,
**dadurch gekennzeichnet, dass**
die Steuereinheit derart ausgebildet ist, dass mit der Steuereinheit das Verfahren gemäß zumindest einem der Ansprüche 2 bis 12 ausführbar ist.
